# FASCICULE DE BREVET EUROPEEN

(11) **EP 4 422 922 B1**
(45) Date de publication et mention de la délivrance du brevet: **03.09.2025**
(21) Numéro de dépôt: 22805868.1
(22) Date de dépôt: 21.10.2022
(51) Int. Cl.: B60Q 1/076, B60Q 1/068

(54) **DISPOSITIF D'ÉCLAIRAGE POUR UN PROJECTEUR D'UN VÉHICULE**
BELEUCHTUNGSEINRICHTUNG FÜR EINEN SCHEINWERFER EINES FAHRZEUGS
LIGHTING DEVICE FOR A HEADLAMP OF A VEHICLE

(30) Priorité: 27.10.2021 FR 2111385
(43) Date de publication de la demande: 04.09.2024
(73) Titulaire: Valeo Vision, 93012 Bobigny Cedex (FR)
(72) Inventeur: QUAN, Jun, WUHAN, Hubei 430014 (CN); CRASNIER, Nicolas, 49000 Angers (FR)
(74) Mandataire: Valeo Visibility
(86) Numéro de dépôt international: PCT/EP2022/079353
(87) Numéro de publication internationale: WO 2023/072747

(56) Documents cités:
- EP-A1- 3 907 106
- WO-A1-2020/135373
- WO-A1-2021/209021
- US-A1- 2008 247 182
- US-A1- 2014 185 307
- US-A1- 2021 140 602

## Description

L'invention concerne un dispositif d'éclairage pour un projecteur, notamment pour un projecteur avant d'un véhicule. L'invention concerne également un véhicule équipé d'un tel dispositif d'éclairage.

Les véhicules automobiles sont classiquement équipés de projecteurs, notamment avant, ou phares, destinés à illuminer la route devant le véhicule la nuit ou en cas de luminosité réduite. Ces projecteurs peuvent généralement être utilisés selon deux modes d'éclairage : un premier mode « feux de route » et un deuxième mode « feux de croisement ». Le mode « feux de route » permet d'éclairer fortement la route loin devant le véhicule. Le mode « feux de croisement » procure un éclairage plus limité de la route mais offrant néanmoins une bonne visibilité sans éblouir les autres usagers de la route. En ce sens, les projecteurs peuvent comprendre un ou plusieurs modules lumineux distincts.

Classiquement, chaque module lumineux est monté sur au moins un support mobile pouvant notamment pivoter afin de permettre un réglage de l'inclinaison des modules lumineux afin de s'assurer que la route est éclairée de façon adéquate par les modules lumineux sans gêner les autres utilisateurs. Un tel support mobile est déplacé au moyen d'un ou plusieurs moyens de réglages et peut être un support principal, commun à une pluralité de modules lumineux, ou un support intermédiaire propre à un module défini.

Particulièrement, lorsque le projecteur comprend une pluralité de modules lumineux, il est connu de pouvoir mettre en œuvre le réglage indépendant ou simultané desdits modules par l'intermédiaire de moyens de couplage. De tels moyens de couplage présentent néanmoins l'inconvénient d'être encombrants, complexes, et inadaptés à l'augmentation du nombre de modules lumineux, par exemple dans le cas d'un projecteur comprenant plus de deux modules lumineux. Par ailleurs, les moyens de couplages sont limités par les nombreuses contraintes dimensionnelles imposées par l'aspect esthétique du véhicule, par l'encombrement disponible pour leur intégration ainsi que par les différentes fonctions lumineuses que le projecteur doit accommoder.

Un dispositif d'éclairage pour projecteur comportant une pluralité de modules lumineux superposés est connu de US 2021/140602 A.

La présente invention s'inscrit dans ce contexte et vise à fournir un dispositif d'éclairage comprenant une pluralité de modules lumineux permettant un réglage simple et adapté des modules lumineux tout en minimisant l'encombrement du dispositif d'éclairage.

L'invention concerne un dispositif d'éclairage pour un projecteur, notamment un projecteur avant, d'un véhicule, le dispositif d'éclairage comprenant les caractéristiques de la revendication 1.

Notamment, les premier et deuxième modules lumineux peuvent présenter un décalage, relativement l'un à l'autre, le long d'une direction orthogonale au premier axe de réglage et aux axes de pivotement, notamment une direction longitudinale.

Le premier organe de couplage peut comprendre une biellette reliée à l'un des premier et deuxième modules en une première zone de couplage et à l'autre des premier et deuxième modules en une deuxième zone de couplage, la biellette étant coudée de sorte qu'elle présente au moins un premier coude, s'étendant aux abords de la première zone de couplage, et un deuxième coude, s'étendant aux abords de la deuxième zone de couplage.

Notamment, une distance séparant, le long de la direction définie par le premier axe de réglage, l'axe de pivotement de l'un des premier et deuxième modules de la première zone de couplage peut être identique à une distance séparant l'axe de pivotement de l'autre des premier et deuxième modules de la deuxième zone de couplage.

Le dispositif d'éclairage peut, en outre, comprendre au moins un moyen de guidage du premier organe de couplage au moins en partie relié au support intermédiaire propre au premier module et/ou au moins en partie relié au support intermédiaire propre au deuxième module.

Le deuxième organe de couplage peut comprendre une glissière reliée à l'un des deuxième et troisième modules en une première zone de couplage et à l'autre des deuxième et troisième modules en une deuxième zone de couplage, la glissière étant configurée pour coopérer avec la platine principale afin d'être déplacée le long d'une direction perpendiculaire au premier axe de réglage et aux axes de pivotement, notamment une direction longitudinale.

Notamment, une distance séparant, le long de la direction définie par le premier axe de réglage, l'axe de pivotement de l'un des deuxième et troisième modules de la première zone de couplage de liaison peut être identique à une distance séparant l'axe de pivotement de l'autre des deuxième et troisième modules de la deuxième zone de couplage.

Les deuxième et troisième modules lumineux peuvent présenter un décalage, relativement l'un à l'autre, le long d'une direction orthogonale au premier axe de réglage et aux axes de pivotement, notamment une direction longitudinale.

Notamment, indépendamment du mode de réalisation mis en œuvre, le premier axe de réglage peut être interposé entre au moins deux des trois modules lumineux le long de la direction parallèle aux axes de pivotements.

Notamment, indépendamment du mode de réalisation mis en œuvre, le premier axe de réglage peut être centré au sein de la platine principale le long d'une direction parallèle aux axes de pivotement.

L'invention peut également s'étendre à un véhicule automobile comprenant au moins un dispositif d'éclairage tel qu'exposé précédemment.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une vue schématique d'un véhicule selon un mode de réalisation.
La figure 2 est une représentation schématique partielle d'un dispositif d'éclairage selon un premier exemple de réalisation.
La figure 3 est une représentation schématique éclatée du dispositif d'éclairage selon la figure 2, dépourvu de modules lumineux.
La figure 4 est une représentation schématique d'un ensemble formé par un premier support intermédiaire et un deuxième support intermédiaire.
La figure 5 est une représentation schématique d'un exemple de réalisation du premier support intermédiaire.
La figure 6 est une représentation schématique d'un exemple de réalisation du deuxième support intermédiaire.
La figure 7 est une représentation schématique d'un dispositif d'éclairage selon un deuxième exemple de réalisation.
La figure 8 est une représentation schématique éclatée du dispositif d'éclairage selon la figure 7, dépourvu de modules lumineux.
La figure 9 est une représentation schématique d'un ensemble formé par un premier support intermédiaire et un deuxième support intermédiaire du dispositif d'éclairage illustré à la figure 7.
La figure 10 est une représentation schématique d'un dispositif d'éclairage selon un mode de réalisation selon l'invention.
La figure 11 est une représentation schématique éclatée du dispositif d'éclairage selon la figure 10, dépourvu de modules lumineux.
La figure 12 est une représentation schématique en coupe du dispositif d'éclairage illustré à la figure 10.

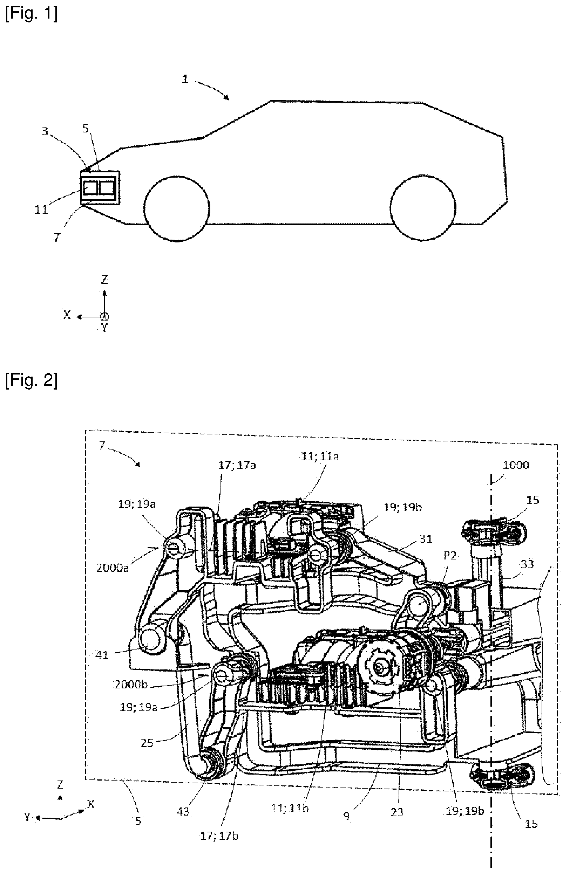

Les figures 2 à 9 illustrent des exemples de réalisation qui ne font cependant pas partie de l'invention.

La figure 1 illustre schématiquement un mode de réalisation d'un véhicule 1, en particulier un véhicule 1 automobile équipé d'un ou plusieurs projecteur(s) 3. En l'espèce, les projecteurs 3 considérés sont des projecteurs avant.

Par convention dans la description ci-après, la direction selon laquelle un véhicule 1 automobile se déplace en ligne droite est définie comme étant la direction longitudinale X. Le sens avant correspond au sens dans lequel le véhicule 1 automobile se déplace habituellement le long de la direction longitudinale et est opposé au sens arrière. La direction perpendiculaire à la direction longitudinale et située dans un plan parallèle au sol est nommée direction transversale Y. La direction perpendiculaire aux directions X et Y, autrement dit orthogonale au sol sur lequel repose le véhicule 1, est nommée direction verticale Z. Ainsi, on définit un repère direct XYZ représenté dans les figures le nécessitant.

Egalement, les termes « vertical », « horizontal », « haut », « bas », « droite », « gauche », se réfèrent à des directions ou des sens aisément identifiables en position d'utilisation d'un projecteur équipant un véhicule 1. Le terme « haut » détermine une orientation vers le toit et/ou le capot du véhicule 1, tandis que le terme « bas » détermine une orientation vers un bas de caisse du véhicule 1. Le terme « droite » détermine une orientation vers le côté droit d'une scène de route dans la direction d'avancement du véhicule 1, tandis que le terme « gauche » détermine une orientation vers le côté gauche d'une scène de route dans la direction d'avancement du véhicule 1.

Le projecteur 3 comprend un boîtier 5, schématiquement représenté en pointillés notamment à la figure 2, ouvert sur un côté et dans lequel est disposé au moins un dispositif d'éclairage 7. Le projecteur 3 comprend également une glace, non représentée, fermant l'ouverture du boitier 5.

De manière générale, le dispositif d'éclairage 7 comprend une platine principale 9 sur laquelle une pluralité de modules 11 lumineux distincts, c'est-à-dire au moins deux modules 11 lumineux, sont montés. A titre d'exemple non limitatif, chaque module 11 lumineux peut consister en un module 11 émetteur d'un faisceau Code, aussi appelé feu de Croisement, et/ou d'un faisceau Route. Par exemple, un module lumineux peut comprendre au moins une source de lumière et une ou plusieurs optiques de mise en forme des faisceaux lumineux émis par la source de lumière, et éventuellement un dissipateur thermique.

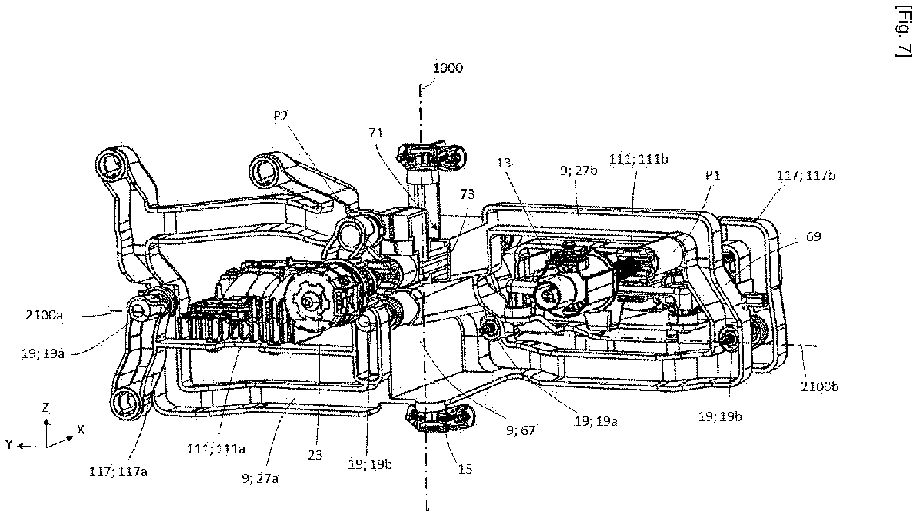

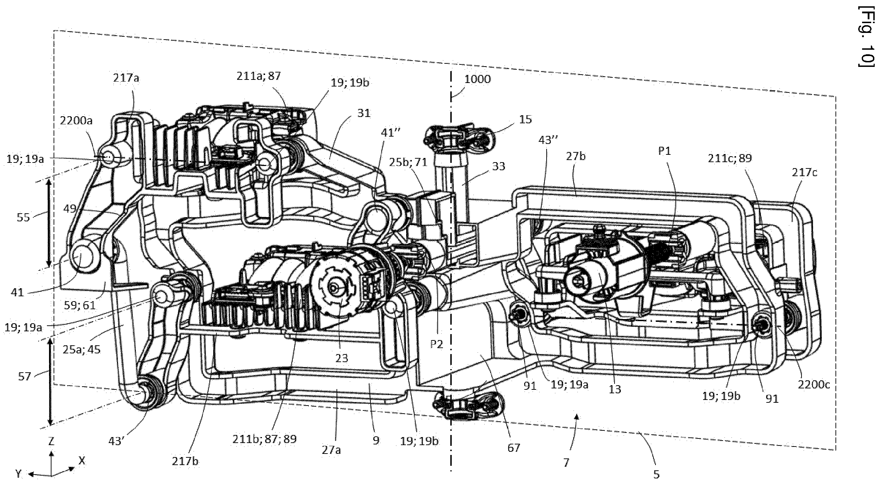

La platine principale 9 est montée mobile relativement au boîtier 5. Le dispositif d'éclairage 7 comprend un premier moyen de réglage 13 disposé sur la platine principale 9 et configuré pour déplacer la platine principale 9 autour d'un premier axe de réglage 1000 afin de permettre le déplacement simultané des différents modules 11 de la pluralité de modules 11 portés par la platine principale 9. Un tel moyen de réglage est notamment visible aux figures 7 et 10. Par exemple, la platine principale 9 comprend des moyens de rotation 15 de forme complémentaire avec des moyens de réception, non représentés, compris dans le boîtier 5. De tels moyens de rotation 15 et moyens de réception définissent ensemble, par exemple, une liaison pivot.

Le premier moyen de réglage 13 agit notamment au niveau d'un premier point d'actionnement P1 compris dans la platine principale et configuré pour déplacer la platine principale 9 en rotation autour du premier axe de réglage 1000. Aussi, de manière préférentielle, un tel premier point d'actionnement P1 s'étend à distance non nulle du premier axe de réglage 1000. De la sorte, la platine porte entièrement la pluralité de modules 11 lumineux propres au dispositif d'éclairage 7 et les modules 11 lumineux sont désolidarisés de toute liaison mécanique directe avec le boîtier 5.

Dans l'exemple illustré, le premier axe de réglage 1000 s'étend parallèlement, ou sensiblement parallèlement, à la direction verticale Z. La platine principale 9 peut ainsi pivoter horizontalement vers la droite ou vers la gauche de sorte à permettre un réglage d'une position angulaire de la platine principale 9 et des modules 11 lumineux par rapport au boîtier 5 autour du premier axe de réglage 1000. Les modules 11 lumineux étant entièrement portés par la platine principale 9, on comprendra que le réglage de la position angulaire de cette dernière permet un réglage simultané de la position angulaire des modules 11 lumineux. Selon une alternative non représentée, le premier axe de réglage 1000 peut s'étendre parallèlement à la direction transversale Y.

Les modules 11 lumineux sont également montés mobiles relativement à la platine principale 9 par l'intermédiaire d'une pluralité de supports intermédiaires 17. Particulièrement, le dispositif d'éclairage 7 comprend autant de supports intermédiaires 17 que de modules 11 lumineux de sorte que chaque module 11 lumineux considéré est monté sur un support intermédiaire 17 qui lui est propre. En particulier, le support intermédiaire de chaque module lumineux est distinct des éléments constituant le module lumineux. Le support intermédiaire se distingue donc d'un dissipateur de chaleur. Par exemple, le support intermédiaire peut être formé dans un matériau polymère synthétique, de préférence non thermiquement conducteur, comme du plastique.

Les supports intermédiaires 17 sont chacun relié à la platine principale 9 au niveau de deux points de pivotement 19 définissant un axe de pivotement 2000 propre au support intermédiaire 17, et par extension au module 11 lumineux, considéré, lesdits axes de pivotement 2000 étant distincts d'un module 11 à un autre. On entend ici par « point de pivotement » une zone de liaison entre la platine principale 9 et un support intermédiaire 17 considéré. En particulier, les points de pivotement 19 correspondent à des éléments de pivotement 21, par exemple du type liaison rotule, permettant le pivotement du module 11 lumineux autour de son axe de pivotement 2000. Les différents axes de pivotement 2000 d'un dispositif d'éclairage 7 sont parallèles entre eux. De manière préférentielle, ils s'étendent parallèlement à la direction horizontale, et sont particulièrement orientés sensiblement selon la direction transversale Y selon le mode de réalisation.

Le dispositif d'éclairage 7 comprend encore un deuxième moyen de réglage 23 configuré pour déplacer simultanément tout ou partie des modules 11 de la pluralité de modules relativement à la platine principale 9. Le deuxième moyen de réglage 23 permet le basculement de chaque module 11 lumineux autour de son axe de pivotement 2000, ici horizontal ou sensiblement horizontal, qui lui est propre de manière à régler la hauteur des faisceaux projetés, par exemple en fonction de l'assiette du véhicule 1. Selon l'alternative précédemment évoquée, le deuxième moyen de réglage peut permettre un réglage autour d'axes verticaux ou sensiblement verticaux. Le deuxième moyen de réglage 23 agit au niveau d'un deuxième point d'actionnement P2, compris dans l'un des supports intermédiaire 17, et permet de manœuvrer le pivotement des supports intermédiaires 17 par rapport à la platine principale 9 autour de leur axe de pivotement respectif.

Afin d'assurer un déplacement simultané d'au moins une partie des modules 11 lumineux de la pluralité de modules 11 lumineux lors du réglage de la hauteur des faisceaux lumineux, le dispositif d'éclairage 7 comprend au moins un organe de couplage 25 de deux modules 11 de la pluralité de modules 11. Un tel organe de couplage 25 relie les supports intermédiaires 17 portant lesdits modules 11 de sorte à permettre leur déplacement simultané par transmission d'un déplacement de l'un des deux modules 11 à l'autre des deux modules 11 et réciproquement. Autrement dit au moins deux modules et un organe de couplage 25 peuvent former un ensemble ou un sous-ensemble au sein de la pluralité de modules 11 du dispositif d'éclairage 7. L'organe de couplage 25 peut être réalisé selon différentes alternatives, exposées ci-dessous, selon le positionnement relatif des deux modules 11 lumineux considérés.

Les figures 2 à 6 illustrent un dispositif d'éclairage 7 selon un premier exemple de réalisation. Le dispositif d'éclairage 7 comprend les différents composants tels qu'exposés plus haut et présente au moins deux modules 11 lumineux, qualifiés ci-après de premier module 11a et deuxième module 11b, respectivement portés par un premier support intermédiaire 17a et un deuxième support intermédiaire 17b parmi les supports intermédiaires 17 cités précédemment. Lesdits modules 11a, 11b sont particulièrement disposés au sein du projecteur 3 de sorte à être au moins en partie superposés le long d'une direction orthogonale à leurs axes de pivotement 2000, notamment le long de la direction verticale Z. En d'autre termes, au moins un axe vertical passe par le premier module 11a et le deuxième module 11b. En l'espèce, le deuxième module 11b présente une position basse, le long de la direction verticale Z, relativement au premier module 11a.

Dans l'exemple illustré, le premier module 11a peut notamment être du type feu de Croisement, ou Code, tandis que le deuxième module peut être du type Route. Alternativement encore, le premier module et le deuxième module peuvent être deux faisceaux d'un même feu, notamment un feu de Croisement. Par exemple, le premier module 11a peut former un faisceau comportant une coupure supérieure plate ou sensiblement plate, correspondant à un faisceau de type « flat » en anglais, et le deuxième module 11b peut former un faisceau comportant une coupure supérieure avec une portion oblique, correspondant à un faisceau de type « kink » en anglais, ou inversement.

Dans un tel exemple de réalisation, la platine principale 9 comprend au moins un cadre 27 configuré pour porter le deuxième support intermédiaire 17b et le deuxième module 11b de manière à l'entourer. Le cadre 27 est notamment fermé et composé d'une pluralité de branches 29, lesdites branches 29 pouvant être au moins en partie droites et/ou courbées. La platine principale 9 comprend, par ailleurs, deux membres 31, issus du cadre 27, qui s'étendent vers le haut et sont configurés pour porter le premier support intermédiaire 17a et le premier module 11a. De la sorte, lorsque le projecteur 3 est en position dans le véhicule 1, le premier support intermédiaire 17a et/ou le premier module 11a s'étend(ent) au moins en partie entre les deux membres 31.

Le cadre 27 et les membres 31 forment avantageusement un ensemble monobloc, c'est-à-dire qu'ils ne peuvent être dissociés l'un de l'autre sans résulter en leur dégradation, voire en leur destruction. A noter que la forme de la platine principale illustrée n'est en rien limitative. Aussi, sa forme pourra par exemple être inversée de sorte que le cadre 27 entoure le premier module 11a, ou encore que les membres 31 s'étendent vers le bas. Egalement, selon une alternative non représentée, les membres 31 peuvent être rapportés et fixés, par exemple par vissage ou soudage, sur le cadre 27. Alternativement encore, le cadre 27 pourra être conformé et/ou dimensionné pour porter directement le premier support intermédiaire 17a et le deuxième support intermédiaire 17b.

Comme divulgué précédemment, la platine principale 9 est mobile autour du premier axe de réglage 1000, ici vertical. Elle porte deux moyens de rotation 15 définissant une liaison pivot et permettant son déplacement relativement au boîtier 5 du projecteur autour du premier axe de réglage 1000. Ces deux moyens de rotation 15 peuvent notamment être disposés au niveau de parties ou d'extrémités opposées, le long de la direction verticale, de la platine principale 9, par exemple au niveau d'extrémités libres d'une colonne 33 reliée au cadre 27.

Les supports intermédiaires 17 sont montés mobiles, en particulier pivotant, relativement à la platine principale 9. Chacun des supports intermédiaires 17 comporte par exemple d'une part un plateau 35, sur lequel est au moins en partie disposé le module 11 lumineux considéré, et deux bras 37 reliés au plateau 35 et s'étendant de part et d'autre de celui-ci.

Le premier support intermédiaire 17a présente, selon un exemple non limitatif, une forme sensiblement en « H ». Le plateau 35 s'étend au moins en partie dans un plan horizontal, ou sensiblement horizontal. Un premier point de pivotement 19a, participant à définir l'axe de pivotement 2000 du premier module 11a lumineux, appelé ci-après premier axe de pivotement 2000a, est compris dans un premier bras 37a. Un deuxième point de pivotement 19b est comprise dans un deuxième bras 37b. Les points de pivotement 19 comprennent notamment des têtes configurée pour coopérer avec des moyens de liaison 39 de forme complémentaire, compris dans la platine principale 9. En l'espèce, le premier support intermédiaire 17a vient se fixer au niveau des membres 31 de la platine principale 9. Egalement, les points de pivotement 19a, 19b du premier support intermédiaire 17a sont alignées, ou sensiblement alignées, dans un plan parallèle au sol.

Similairement, le deuxième support intermédiaire 17b comprend un plateau 35 et deux bras 37. Les bras 37 s'étendent de part et d'autre dudit plateau 35 le long de la direction transversale Y et de la direction verticale Z dans l'exemple illustré. Chaque bras 37 comprend un point de pivotement 19a, 19b telle que décrit plus haut, celui-ci étant formé par une liaison avec la platine principale 9 réalisée au niveau du cadre 27. Notamment, les bras 37 du deuxième support intermédiaire 17b viennent coopérer avec deux branches 29 opposées du cadre 27.

Egalement, les premier support intermédiaire 17a et deuxième support intermédiaire 17b sont indirectement reliés l'un à l'autre par l'intermédiaire de l'organe de couplage 25. Particulièrement, l'organe de couplage 25 est relié d'une part à une première zone de couplage 41, comprise dans le premier support intermédiaire 17a, et d'autre part à une deuxième zone de couplage 43, comprise dans le deuxième support intermédiaire 17b.

Selon l'exemple particulier de réalisation illustré, le premier module 11a et le deuxième module 11b présentent un décalage, relativement l'un à l'autre, le long de la direction longitudinale X. Autrement dit, lesdits modules 11 sont décalés le long d'une direction orthogonale au premier axe de réglage 1000 et aux axes de pivotement. Par exemple, un tel décalage peut être évalué au niveau d'une face avant ou au niveau des points de pivotement propre(s) à chacun desdits modules 11. En l'espèce, le deuxième module 11b présente une position plus en avant que le premier module 11a le long de la direction longitudinale et la deuxième zone de couplage 43 présente un décalage vers l'avant, le long de la direction longitudinale, relativement à la première zone de couplage 41. Un tel positionnement est notamment conditionné par la forme, en particulier le galbe, de la glace du projecteur 3 et, par extension, par le design du véhicule.

L'organe de couplage 25 peut comprendre une biellette 45, tel que représenté aux figures 2 à 4. La biellette 45 est indirectement reliée au premier module 11a par l'intermédiaire du premier support intermédiaire 17a au niveau de la première zone de couplage 41 et est indirectement reliée au deuxième module 11b par l'intermédiaire du deuxième support intermédiaire 17b au niveau de la deuxième zone de couplage 43. Afin de limiter l'encombrement généré par l'organe de couplage 25 et afin de s'adapter au décalage, vertical d'une part et longitudinal de l'autre, la biellette 45 est avantageusement coudée. Elle comprend notamment une portion intermédiaire 47 droite, ou sensiblement droite, ainsi que deux portions extrêmes 49 opposées, destinées à être montée chacune sur l'un des supports intermédiaires 17 et chacune reliée à la portion intermédiaire 47 par un coude 51. Particulièrement, un premier coude 51a s'étend aux abords de la première zone de couplage 41 tandis qu'un deuxième coude 51b s'étend aux abords de la deuxième zone de couplage 43.

La biellette 45 présente particulièrement une forme en « S », ou sensiblement en « S », c'est à dire que les deux portions extrêmes 49 de la biellette 45, s'étendent transversalement à la portion intermédiaire 47 et vers des sens opposés d'une même direction. Ici, lorsque le dispositif d'éclairage 7 est assemblé et disposé dans le véhicule, la portion intermédiaire 47 s'étend verticalement, ou sensiblement verticalement, tandis que les portions extrêmes 49 s'étendent transversalement, notamment perpendiculairement à celle-ci. Dans l'exemple illustré, une première portion 49 extrême de la biellette 45, reliée au premier support intermédiaire 17a, s'étend vers l'arrière, tandis qu'une deuxième portion extrême 49, opposée, s'étend vers l'avant.

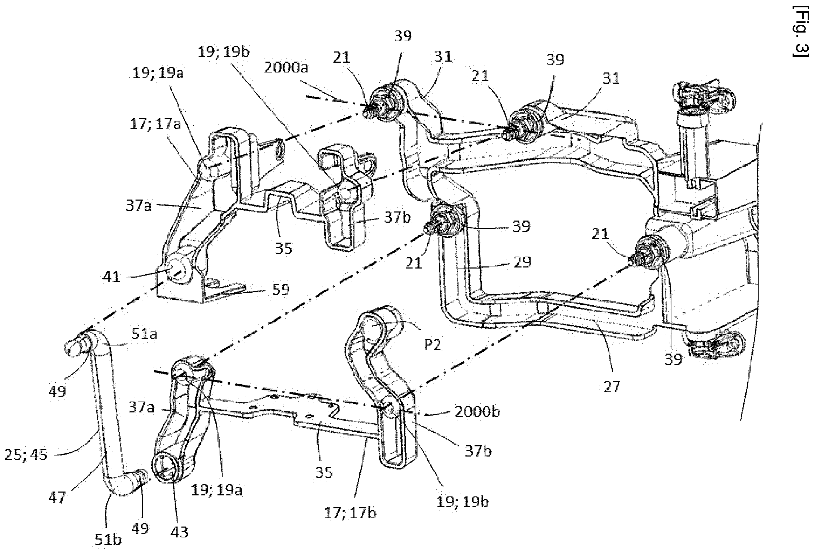

Chaque portion extrême 49 porte un élément de liaison 53 configuré pour coopérer par complémentarité de forme avec un élément de réception compris dans l'un des supports intermédiaires 17. Les éléments de liaison présentent notamment la forme de têtes au moins en partie circulaires de sorte à former une liaison rotule avec les différents supports intermédiaires 17, tel que visible à la figure 3.

Ainsi, chacun des supports intermédiaires 17 est relié en au moins trois « points » ou zones à un autre composant du dispositif d'éclairage. Dans les liaisons réalisées entre les points de pivotement 19 et la platine principale 9, un centre de ladite liaison reste sensiblement fixe dans l'espace par rapport à une position initiale, ou une position de repos. A l'inverse, un centre de la liaison existant entre l'une des zones de couplage 41, 43 et l'organe de couplage 25 est amenée à être déplacée le long d'une direction d'extension de la portion intermédiaire 47, en l'espèce le long de la direction verticale Z ou sensiblement verticale.

Comme précédemment exposé, au sein d'un support intermédiaire 17 considéré, les deux points de pivotement 19 sont alignés de manière à définir l'axe de pivotement 2000 du module 11 et du support considéré. La zone de couplage propre au support intermédiaire 17 considéré est, quant à elle, déportée relativement à l'axe de pivotement 2000, notamment le long de la direction définie par le premier axe de réglage 1000, c'est à dire ici la direction verticale Z.

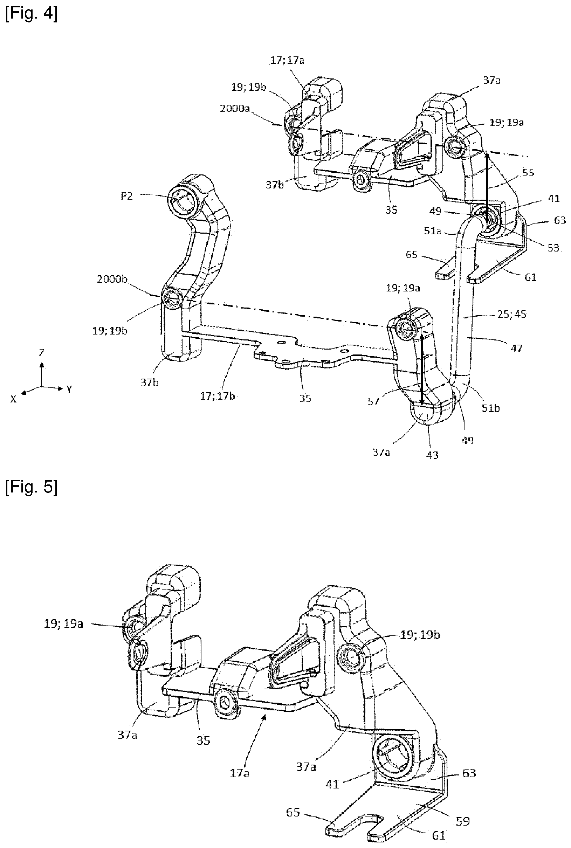

De manière préférentielle, la zone de couplage 43, 44 est agencée dans l'un des bras 37 du support intermédiaire 17, à distance non nulle du point de pivotement 19 compris dans ce même bras 37. Par exemple, tel qu'illustré à la figure 4 ou 5 pour le premier support intermédiaire 17a, le premier bras 37a comprend le premier point de pivotement 19a et la première zone de couplage 41, celles-ci étant notamment disposées dans des parties extrêmes opposées du bras 37. A l'inverse, le deuxième point de pivotement 19b présente un positionnement plus central, le long de la direction verticale Z, au sein du deuxième bras 37.

Similairement, dans le deuxième support intermédiaire 17b le premier bras 37a comprend premier point de pivotement 19a du deuxième axe de pivotement 2000 et la deuxième zone de couplage 43, cette dernière présentant préférentiellement une position extrêmale au sein du premier bras 37a.

Par ailleurs, au sein du dispositif d'éclairage 7, la première zone de couplage 43 et la deuxième zone de couplage 44 sont préférentiellement positionnées de sorte à être alignées, ou sensiblement alignées, le long de la direction définie par le premier axe de réglage 1000, à savoir ici la direction verticale Z.

En outre, de manière optionnelle mais préférentielle, une distance séparant, le long de la direction définie par le premier axe de réglage 1000, l'axe de pivotement 2000 de l'un des deux modules 11 de la première zone de couplage 41 est identique à une distance séparant l'axe de pivotement 2000 de l'autre des deux modules 11 de la deuxième zone de couplage 43. Dans l'exemple illustré, le premier axe de pivotement 2000a du premier module 11a est ainsi séparé de la première zone de couplage 41 par une distance 55, définie le long de la direction verticale Z, égale à la distance 57 séparant le deuxième axe de pivotement 2000b de la deuxième zone de couplage 43. Un tel positionnement des zones de couplage 41, 43 vise particulièrement à réduire les variations du degré de basculement entre les deux modules 11 lorsque le déplacement de l'un des deux modules est transmis à l'autre desdits modules.

Dans l'exemple de réalisation illustré, le deuxième moyen de réglage 23 est indirectement relié aux premier et deuxième modules 11a, 11b par l'intermédiaire du deuxième support intermédiaire 17b. Particulièrement, le deuxième moyen de réglage 23 est relié au deuxième support intermédiaire 17b au niveau du deuxième point d'actionnement P2, lequel est compris dans l'un des bras 37 dudit support. Plus précisément, le deuxième point d'actionnement P2 est disposé dans le deuxième bras 37b, à distance non nulle du deuxième axe de pivotement 2000b le long de la direction verticale Z. Ainsi, en fonction des instructions de commande de réglage vertical reçues, automatiques ou manuelles, le deuxième moyen de réglage 23 tire ou pousse le deuxième support intermédiaire 17b au niveau du deuxième point d'actionnement P2 de manière à faire pivoter autour du deuxième axe de pivotement 2000b le deuxième support intermédiaire 17b, et par extension le deuxième module 11b, dans un sens ou dans l'autre afin de faire pointer le faisceau émis par chacun de ces modules 11 plus ou moins loin sur la chaussée.

Optionnellement, afin d'assurer la transmission optimale du déplacement d'un module 11 à l'autre, le dispositif d'éclairage 7 peut comprendre au moins un moyen de guidage 59 de l'organe de couplage 25. L'au moins un moyen de guidage 59 peut être au moins en partie relié au support intermédiaire 17 propre à l'un des deux modules 11 et/ou au moins en partie relié au support intermédiaire 17 propre à l'autre des deux modules 11.

Par exemple, tel que représenté à la figure 4 ou 5, le moyen de guidage 59 peut comprendre une ailette 61 reliée au premier support intermédiaire 17a. L'ailette 61 comprend une portion d'accroche 63, reliée au premier bras 37a du premier support intermédiaire 17a, et une portion de guidage 65, apte à recevoir et/ou coopérer avec l'organe de couplage 25. La portion d'accroche 63 et la portion de guidage 65 peuvent notamment s'étendre transversalement l'une à l'autre, par exemple perpendiculairement. L'ailette 61 peut être rapportée et fixée au premier support intermédiaire 17a, ou, alternativement, peut être venue de matière avec ce dernier.

La portion de guidage 65 est configurée pour limiter les déplacements de la biellette 45 le long d'au moins une direction transversale, notamment orthogonale, à la direction d'extension de la biellette 45 et/ou à la direction du premier axe de réglage 1000. En l'espèce, le moyen de guidage 59 participe à optimiser le déplacement de la biellette 45 le long de la direction verticale Z en limitant ses déplacements dans les deux sens de la direction transversale Y notamment. La portion de guidage 65 présente ici une forme ouverte sensiblement en « U » bordant une ouverture apte à recevoir tout ou partie de l'organe de couplage 25, notamment ici la portion intermédiaire 47 de la biellette 45. Dans l'exemple illustré, elle est de forme complémentaire à la biellette 45 et ne limite les déplacements de celle-ci que dans un sens de la direction longitudinale X, ici vers l'arrière du véhicule 1. Selon une alternative non représentée, la portion de guidage 65 peut être fermée, c'est-à-dire que l'ouverture est délimitée par un bord continu de sorte que les déplacements du moyen de blocage sont limités dans les deux sens de la direction longitudinale X.

L'ailette 61 est disposée aux abords de la première zone de couplage 41. De la sorte, la portion de guidage 65 s'étend transversalement à la direction verticale Z, en direction de l'organe de couplage 25. De manière préférentielle, la portion de guidage 65 coopère avec la portion intermédiaire 47 droite de la biellette 45.

Avantageusement, le moyen de guidage 59 peut être configuré pour limiter les déplacements de l'organe de couplage 25 le long de trois direction. Notamment, l'ailette 61 du moyen de guidage 59 peut être configurée pour former butée de l'organe de couplage 25, d'une part le long des direction transversales Y et le long de tout ou partie de la direction longitudinale X, tel qu'exposé précédemment, et, d'autre part, le long de la direction de déplacement de la biellette 45, ici la direction verticale Z. Par exemple, le moyen de guidage 59 forme butée d'au moins l'un des coudes 51 de la biellette 45 le long d'au moins un sens de la direction verticale Z. Un tel arrangement permet notamment de limiter le débattement du module 11 lumineux considéré.

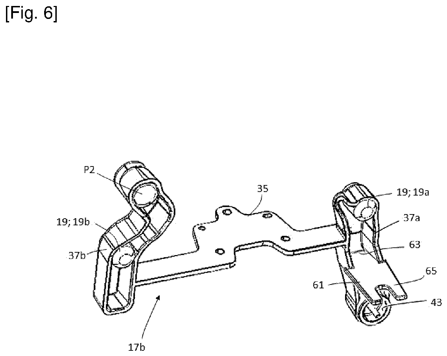

Alternativement ou additionnellement, par exemple, tel que représenté à la figure 6, le moyen de guidage 59 peut comprendre une ailette 61 reliée au deuxième support intermédiaire 17b. Une telle ailette 61 est similaire à celle décrite en référence au premier support intermédiaire 17a et la précédente description s'applique *mutatis mutandis.* Elle s'étend ici aux abords de la deuxième zone de couplage 43. Dans le cas particulier d'une biellette présentant une forme en « S », l'ailette 61 du deuxième support intermédiaire 17b peut, par exemple, s'étendre vers l'avant du véhicule 1.

Selon une alternative de réalisation non représentée, le moyen de guidage 59 peut avantageusement comprendre une pluralité d'ailettes 61. Notamment, une première ailette 61 peut être reliée au premier support intermédiaire 17a tandis qu'une deuxième ailette 61 peut être reliée au deuxième support intermédiaire 17b, chacune aux abord de l'une des zones de couplage 41, 43. Lesdites ailettes 61 peuvent alors particulièrement être orientées vers des sens opposés de la direction longitudinale, par exemple l'une vers l'avant du véhicule et l'autre vers l'arrière.

Ainsi, lorsqu'un utilisateur souhaite régler la hauteur des faisceaux lumineux émis par les deux modules 11a, 11b, il commande le basculement du deuxième module 11b par l'intermédiaire du deuxième moyen de réglage 23. Le deuxième moyen de réglage 23 exerce une force au niveau du deuxième point d'actionnement P2 afin de faire basculer le deuxième support intermédiaire 17b, notamment son plateau 35 et par extension le deuxième module 11b, autour du deuxième axe de pivotement 2000b. Par exemple, une telle force est exercée le long de la direction longitudinale X de sorte à tirer ou pousser ledit support. Simultanément, l'organe de couplage 25, solidaire du deuxième support intermédiaire 17b, est entraîné et le mouvement de basculement mis en œuvre par le deuxième module 11b est transmis au premier module 11a. Par exemple, lorsque le deuxième module 11b est basculé vers le haut, la biellette 45 est déplacée en translation le long de la direction d'extension de la biellette, ici orthogonale aux axes de pivotement 2000a, 2000b, c'est-à-dire le long de la direction verticale Z. La position de la biellette 45 est ainsi abaissée de sorte que la portion intermédiaire 47 descend le long de la direction verticale Z. Les déplacements de la biellette 45 le long de la direction transversale et d'au moins une partie de la direction longitudinale sont limités par le moyen de guidage 59 de sorte que le mouvement est transmis le plus fidèlement possible. Ledit mouvement est transmis au premier module 11a, l'élément de liaison 53 au niveau de la deuxième zone de couplage 43 s'abaissant et faisant basculer le deuxième module 11b vers le haut autour du deuxième axe de pivotement 2000b. L'organe de couplage 25 permet ainsi le basculement du premier module 11a lumineux dans le même sens de pivotement et pour un même degré de basculement que ceux du deuxième module 11b. Les deux modules 11 lumineux sont ainsi réglés simultanément par basculement autour de leur axe de pivotement 2000a, 2000b respectif et une même commande de réglage vertical est transmise uniformément aux deux modules 11.

Les figures 7 à 9 illustrent un deuxième exemple de réalisation du dispositif d'éclairage 7 dans lequel le positionnement relatif des deux modules 11 lumineux, liés entre eux par l'au moins un organe de couplage 25, est distinct de ce qui a été décrit précédemment. Un tel exemple de réalisation reprend les principes du premier exemple de réalisation aussi, la description précédente s'applique-t-elle *mutatis mutandis,* sauf mention contraire. A des fins de clarté, les références rattachées à des composants identiques ou sensiblement identiques sont conservées. Les références rattachées aux modules lumineux et aux supports intermédiaires sont augmentées d'un indice 100 afin de distinguer leur positionnement du premier exemple de réalisation, les modules sont ainsi désignés par la référence 111 tandis que les supports intermédiaires sont désignés par la référence 117.

Le deuxième exemple de réalisation se distingue du premier notamment en ce que les deux modules 111 lumineux sont juxtaposés le long d'une direction parallèle aux axes de pivotement 2100, ici le long d'une direction horizontale ou transversale Y. En d'autre termes le premier module 111a et le deuxième module 111b s'étendent au moins en partie en regard l'un de l'autre le long de la direction transversale Y, le premier module 111a et le deuxième module 111b sont ainsi traversés par un même plan horizontal, comprenant les direction longitudinale X et transversale Y. A titre d'exemple, le premier module 111a peut être du type feu de Croisement tandis que le deuxième module 111b peut être du type Route.

Similairement à ce qui a été précédemment exposé en référence au premier exemple de réalisation, les deux modules 111 lumineux présentent également un décalage, relativement l'un à l'autre, le long de la direction orthogonale au premier axe de réglage 1000 et aux axes de pivotement. En l'espèce, le deuxième module 111b est décalé vers l'avant relativement au premier module 111a le long de la direction longitudinale X.

Similairement au premier exemple de réalisation, la platine principale 9 comprend au moins un cadre 27. Particulièrement, dans l'exemple illustré, la platine principale 9 comprend un premier cadre 27a et un deuxième cadre 27b, reliés l'un à l'autre au niveau d'une branche centrale 67 commune. Chacun des premier cadre 27a et deuxième cadre 27b est configuré pour recevoir au moins un module 111 lumineux parmi les deux modules 111 reliés. En l'espèce, le premier cadre 27a reçoit le premier module 111a et le premier support intermédiaire 117a tandis que le deuxième cadre 27b reçoit le deuxième module 111b et le deuxième support intermédiaire 117b.

Dans la description ci-après, le premier module 111a lumineux et le premier support intermédiaire 117a peuvent reprendre tout ou partie des caractéristiques relatives au deuxième module 11b et au deuxième support intermédiaire 17b respectivement tel que précédemment décrit en référence au premier exemple de réalisation. Le premier support intermédiaire 117a comprend un plateau 35 et deux bras 37. Chaque bras 37 comprend un point de pivotement 19 formé par une liaison avec la platine principale 9, ici réalisée au niveau du premier cadre 27a, et définissant le premier axe de pivotement 2100a du premier support intermédiaire 117a, et par extension du premier module 111a. Notamment, les bras 37 du premier support intermédiaire 117a viennent coopérer avec deux branches 29 opposées du premier cadre 27a.

Le deuxième support intermédiaire 117b présente, selon un exemple non limitatif de réalisation, la forme d'un encadrement fermé comprenant une pluralité de segments 69. On entend ici par « segment » une partie d'un tout. Par exemple, le deuxième support intermédiaire 117b peut s'étendre au moins en partie dans la continuité du deuxième cadre 27b de la platine principale 9 le long de la direction longitudinale X. Alternativement, le deuxième support intermédiaire 117b peut présenter une forme ouverte, par exemple en « U » ou sensiblement en « U ». Le deuxième support intermédiaire 117b est disposé de sorte que, le long de la direction longitudinale X, c'est-à-dire le long de la direction orthogonale aux différents axes de pivotement 2100 et au premier axe de réglage 1000, la platine principale 9 est interposée entre le premier support intermédiaire 117a et le deuxième support intermédiaire 117b. Le deuxième support intermédiaire 117b comprend deux points de pivotement 19, définissant le deuxième axe de pivotement 2100b du deuxième support intermédiaire 117b et du deuxième module 111b. Lesdites points de pivotement 19 sont arrangées dans des segments 69 opposés du deuxième support intermédiaire 117b.

Les premier module 111a et deuxième module 111b sont reliés l'un à l'autre par l'intermédiaire de l'organe de couplage 25. Dans le présent mode de réalisation, l'organe de couplage 25 comprend une glissière 71 reliée d'une part à une première zone de couplage 41, comprise dans le premier support intermédiaire 117a, et d'autre part à une deuxième zone de couplage 43, comprise dans le deuxième support intermédiaire 117b. En particulier, la glissière 71 comprend une tige 73 dont deux extrémités opposées portent un élément de liaison 53 avec l'un des supports intermédiaires 117. Particulièrement, la tige 73 est reliée au premier support intermédiaire 117a et au deuxième support intermédiaire 117b par l'intermédiaire de liaisons rotule, tel qu'exposé précédemment en référence à la biellette 45, reliées à la première zone de couplage 41 et la deuxième zone de couplage 43.

La tige 73 est également configurée pour coopérer avec la platine principale 9 afin d'être déplacée transversalement, notamment perpendiculaire, au premier axe de réglage 1000 et aux axes de pivotement 2100. Particulièrement, la tige est déplacée le long de la direction longitudinale X ou le long d'une direction sensiblement longitudinale. La tige 73 est notamment complémentaire de forme d'un rail 75 compris dans la platine principale 9. En ce sens, elle comprend au moins une nervure 77 configurée pour coopérer avec au moins une rainure 79 comprise dans le rail 75.

La glissière 71 est préférentiellement agencée au voisinage du deuxième moyen de réglage 23. Elle s'étend essentiellement, le long de la direction longitudinale X, entre le premier axe de pivotement 2100a et le deuxième axe de pivotement 2100b. Le rail 75 est particulièrement intégré dans la branche centrale 67 commune aux deux cadres 27a, 27b de la platine principale 9 dans l'exemple illustré. Egalement, la glissière est reliée ou porte le deuxième point d'actionnement P2. Particulièrement, la tige porte le deuxième point d'actionnement P2.

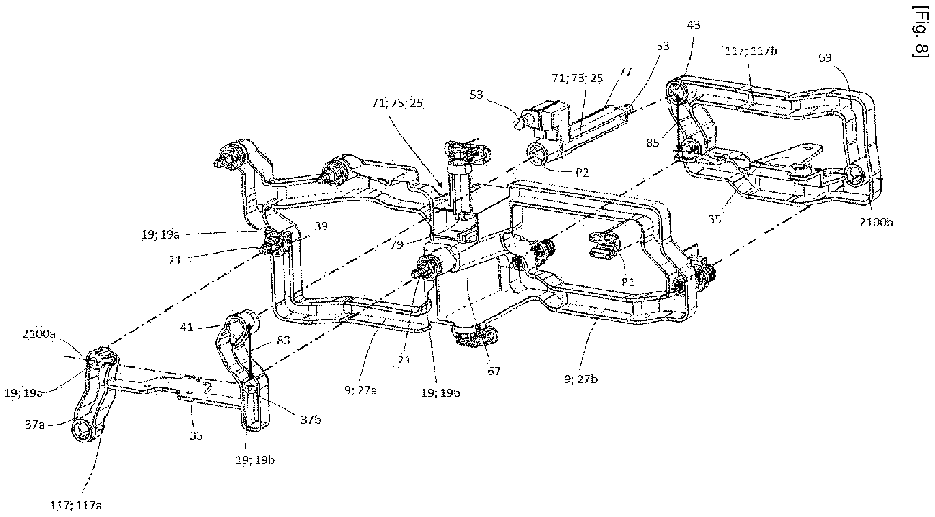

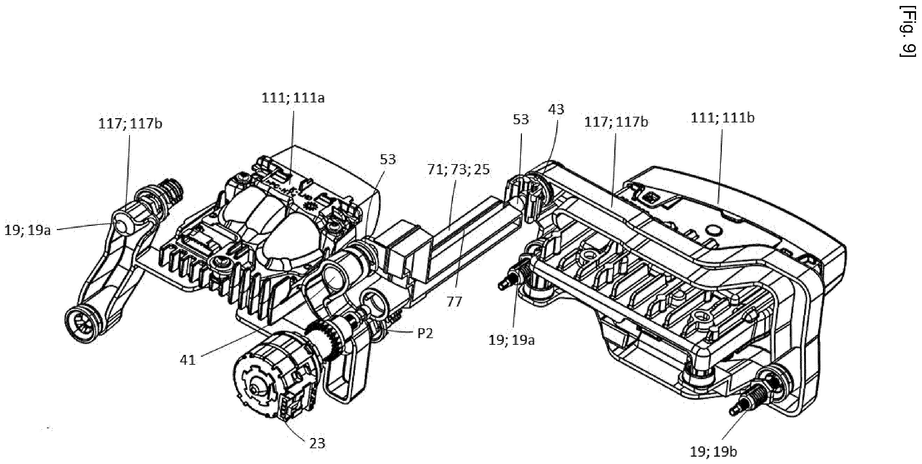

La tige 73, représentée schématiquement sur les figures 8 et 9, est pilotée en translation par des instructions de commande en provenance du deuxième moyen de réglage 23, comprenant par exemple un moteur. La rainure 79 du rail 75 est configurée pour guider la tige 73 dans un mouvement de translation adapté. Le déplacement en translation de la tige 73 de la glissière 71 relativement à la platine principale 9 exerce un effort simultané sur la première zone de couplage 41 et sur la deuxième zone de couplage 43, ce qui entraîne le basculement du premier support intermédiaire 117a, du deuxième support intermédiaire 117b, et par extension des modules 111 lumineux qu'ils portent, autour de l'axe de pivotement 2100 qui leur est propre.

Afin d'assurer un basculement identique du premier module 111a et du deuxième module 111b, le positionnement des zones de couplage 41, 43 est particulièrement défini de sorte qu'une distance 83 séparant, le long de la direction définie par le premier axe de réglage 1000, le premier axe de pivotement 2100a du premier module 111a de la première zone de couplage 41 est identique à une distance 85 séparant le deuxième axe de pivotement 2100b du deuxième module 111b de la deuxième zone de couplage 43.

Ainsi, comme exposé plus haut, lorsqu'un utilisateur souhaite régler la hauteur des faisceaux lumineux émis par les deux modules 111, il commande par l'intermédiaire du deuxième point d'actionnement P2, le basculement du premier module 111a lumineux. Une force est exercée par le deuxième moyen de réglage 23 au niveau du deuxième point d'actionnement P2 afin de faire basculer le premier support intermédiaire 117a, et par extension le premier module 111a, autour du premier axe de pivotement 2100a. Par exemple, une telle force est exercée le long de la direction longitudinale de sorte à tirer ou pousser ledit support. Simultanément, au sein de la glissière 71, la tige 73 solidaire du premier support intermédiaire 117a, est entraînée et déplacée en translation relativement au rail 75 de la platine principale 9. Un tel mouvement est ensuite transmis au deuxième module 111b. Par exemple, lorsque le premier module 111a est basculé vers le haut, la tige 73 est simultanément déplacée en translation le long de la direction longitudinale vers l'arrière et, par voie de conséquence, tire le deuxième module 111b de manière à le basculer selon un même sens de pivotement et pour un même degré de basculement que le premier module 111a lumineux.

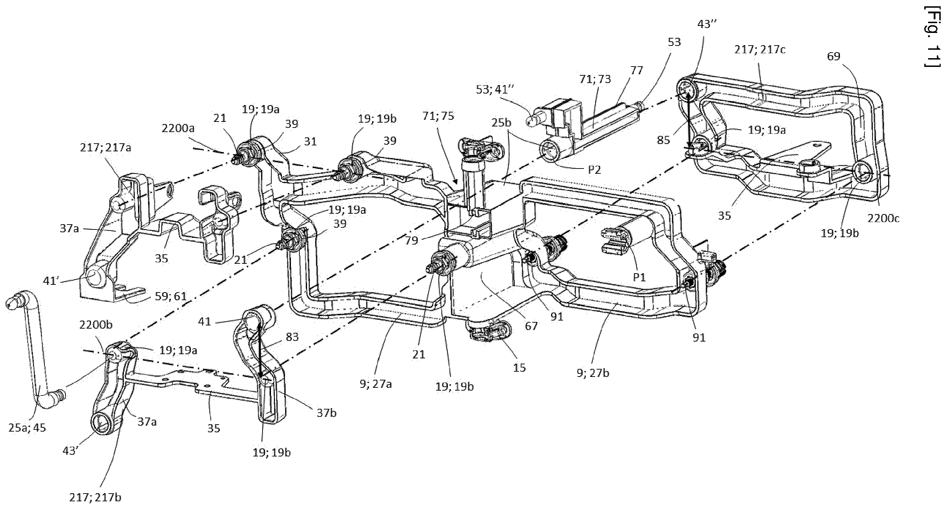

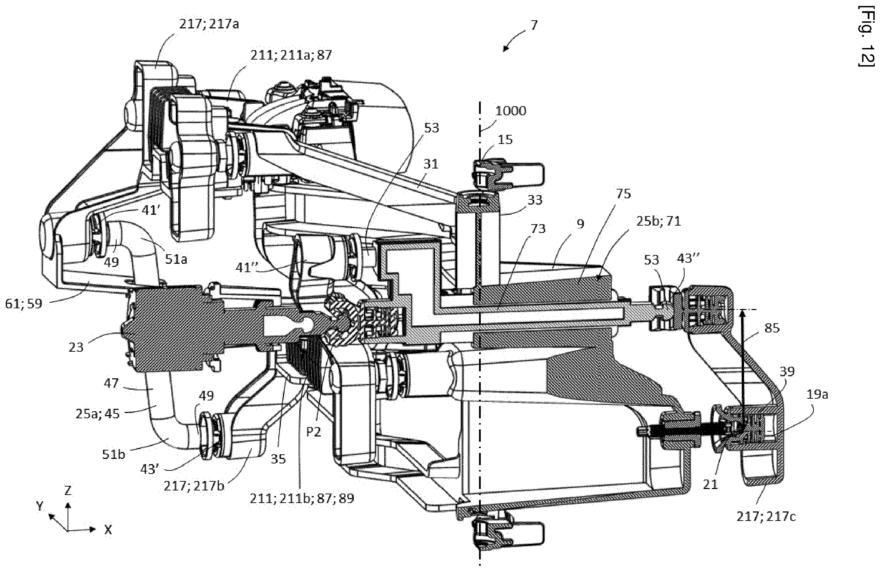

Les figures 10 à 12 illustrent enfin un exemple d'un mode de réalisation selon l'invention dans lequel le dispositif d'éclairage 7 comprend trois modules lumineux. A des fins de clarté, les références rattachées à des composants identiques ou sensiblement identiques au premier ou deuxième exemple de réalisation sont conservées sauf mention contraire. Les références rattachées aux modules lumineux et aux supports intermédiaires sont augmentées d'un indice 200 par rapport au premier mode de réalisation.

Dans le présent mode de réalisation, un premier module 211a lumineux et un deuxième module 211b lumineux sont compris dans un sous-ensemble pouvant être configuré selon le premier mode de réalisation. Un troisième module 211c lumineux est monté mobile sur la platine principale 9 par l'intermédiaire d'un troisième support intermédiaire 217c au niveau de deux points de pivotement 19 réglables définissant un troisième axe de pivotement 2200c propre au troisième module 211c et parallèle aux axes de pivotement du premier module 211a et du deuxième module 211b. Dans un tel dispositif d'éclairage 7, le premier moyen de réglage 13 permet avantageusement le déplacement simultanément des trois modules 211 autour du premier axe de réglage 1000 par l'intermédiaire de la platine principale 9 tandis qu'au moins les modules 211 compris dans le sous-ensemble, c'est-à-dire reliés entre eux par l'organe de couplage 25, peuvent être simultanément déplacés par l'intermédiaire du deuxième moyen de réglage 23.

Dans l'exemple de réalisation particulier illustré, le premier module 211a lumineux et le deuxième module 211b lumineux forment un premier sous-ensemble 87 configuré selon le premier mode de réalisation tandis que le deuxième module 211b et le troisième module 211c forment un deuxième sous-ensemble 89 configuré selon le deuxième mode de réalisation tel qu'exposé précédemment. Aussi la description précédente s'applique *mutatis mutandis à* chacun desdits sous-ensemble, notamment pour ce qui est des positionnements relatifs des modules lumineux et des organes de couplage décrits. Particulièrement, dans un tel exemple de réalisation, le deuxième module 211b lumineux est commun au premier sous-ensemble 87 et au deuxième sous-ensemble 89. Similairement, la platine principale 9 est commune aux deux sous-ensembles.

Dans l'exemple illustré, le premier module 211a et le deuxième module 211b émettent deux faisceaux formant ensemble un feu de Croisement. Par exemple, le premier module peut former un faisceau comportant une coupure supérieure sensiblement plate (correspondant à un faisceau de type « flat » en anglais) et le deuxième module peut former un faisceau comportant une coupure supérieure avec une portion oblique (correspondant à un faisceau de type « kink » en anglais). Le troisième module 211c émet un faisceau formant un feu de route complémentaire qui vient compléter le feu de croisement formé par le premier module 211a et le deuxième module 211b. La superposition des faisceaux formés par le premier module lumineux 211a, le deuxième module lumineux 211b et le troisième module lumineux 211c forme ainsi un faisceau de type route.

Le deuxième module 211b lumineux est relié au premier module 211a par un organe de couplage 25, dit premier organe de couplage 25a, comprenant une biellette 45 telle qu'exposée précédemment. Le deuxième module 211b est par ailleurs relié au troisième module 211c par un organe de couplage 25 distinct du premier organe de couplage 25a, dit deuxième organe de couplage 25b et comprenant une glissière 71 comme décrit plus haut. Les trois modules 211 sont ainsi reliés les uns aux autres, directement ou indirectement, de sorte que le réglage de l'un desdits modules 211 par l'intermédiaire du deuxième moyen de réglage 23 permet ainsi le déplacement simultanément des trois modules 211 autour de leur axe de pivotement 2200 respectif. A noter que le premier module 111a lumineux ainsi que le premier support intermédiaire 117a du deuxième mode de réalisation correspondent ici au deuxième module 211b lumineux et deuxième support intermédiaire 217b respectivement tandis que le deuxième module 11b lumineux et deuxième support intermédiaire 17b du premier mode de réalisation correspondent au troisième module 211c lumineux et au troisième support intermédiaire 217c dans le présent mode de réalisation.

La platine principale 9 peut notamment reprendre tout ou partie des caractéristiques exposées précédemment en référence aux premier et deuxième mode de réalisation. En l'espèce, la platine principale comprend un premier cadre 27a, au niveau duquel s'étend le deuxième module 11b, un deuxième cadre 27b, relié au premier cadre 27a, au niveau duquel s'étend le troisième module 211c lumineux, et deux membres 31, reliés au premier cadre 27a et portant le premier module 11a lumineux.

De manière préférentielle, le premier moyen de réglage 13 est disposé sur la platine principale 9 à distance non nulle du premier axe de réglage 1000, notamment aux abords du troisième module 211c lumineux. Le premier axe de réglage 1000 est également préférentiellement centré, ou sensiblement centré, au sein de la platine principale 9 le long d'une direction parallèle aux axes de pivotement 2100, à savoir ici la direction transversale Y. Le premier axe de réglage 1000 est notamment interposé entre au moins deux des trois modules 211 lumineux le long de la direction transversale Z. Ici, le premier axe de réglage 1000 est interposé entre le premier module 211a et le deuxième module 211b d'une part et le troisième module 211c d'autre part.

Similairement, le deuxième moyen de réglage 23 est disposé aux abords d'une zone centrale de la platine principale 9 le long de la direction transversale Y, notamment au niveau de la branche centrale 67, aux abords du deuxième organe de couplage 25b. En outre, le deuxième moyen de réglage 23 est disposé de sorte à être interposé entre au moins deux axe de pivotement 2200, propres à deux modules 211 distincts, le long de la direction définie par le premier axe de réglage 1000, c'est à dire la direction verticale ici. En l'espèce, le deuxième moyen de réglage est interposé entre le premier axe de pivotement 2200a d'une part, et les deuxième et troisième axes de pivotement 2200b, 2200c d'autre part.

Particulièrement, le dispositif de réglage est configuré de sorte que :
- au niveau du premier organe de couplage 25a, le premier axe de pivotement 2200a du premier module 211a est séparé de la première zone de couplage 41' par une distance 55, définie le long de la direction verticale Z, égale à une distance 57 séparant le deuxième axe de pivotement 2000b de la deuxième zone de couplage 43' du premier organe de couplage 25a ; et
- au niveau du deuxième organe de couplage 25b le positionnement des zones de couplage 41", 43" est particulièrement défini de sorte qu'une distance 83 séparant, le long de la direction définie par le premier axe de réglage 1000, le deuxième axe de pivotement 2200b du deuxième module 211b de la première zone de couplage 41" est identique à une distance 85 séparant le troisième axe de pivotement 2200c du troisième module 211c de la deuxième zone de couplage 43".

Egalement, lesdites distances 55, 57, 83, 85 sont, de manière préférentielle, égales ou sensiblement égales. Un tel positionnement des zones de couplage propres à chacun des organes de couplage 25 vise particulièrement à réduire les variations du degré de basculement entre les trois modules 211.

Ainsi, comme exposé plus haut, lorsque le réglage de la hauteur des faisceaux lumineux émis par les différents modules 211 est commandé le deuxième moyen de réglage 23 exerce, au niveau du deuxième point d'actionnement P2, et en particulier au niveau du support intermédiaire 217b du deuxième module 211b, un effort, entraînant le basculement du deuxième module 211b autour du deuxième axe de pivotement 2200b. Comme décrit plus haut, simultanément, la tige 73 solidaire du troisième support intermédiaire 217c est entraînée et déplacée en translation relativement au rail 75 de la platine principale 9. Le troisième module 211c est alors basculé dans une même mesure que le deuxième module 211b. En parallèle, le basculement du deuxième module 211b entraîne le premier organe de couplage 25a, solidaire du premier support intermédiaire 217a. Le déplacement de la biellette 45 est transmis au premier module 211a, le moyen de liaison au niveau de la deuxième zone de couplage 43' s'abaissant et faisant basculer le premier module 211a dans un même sens de pivotement et pour un même degré de basculement que ceux du deuxième et du troisième module 211b, 211c lumineux. Les modules 211 lumineux sont ainsi réglés simultanément par basculement autour de leur axe de pivotement 2000 respectif et une même commande de réglage est transmise uniformément aux trois modules 211.

Selon un exemple de réalisation alternatif du troisième mode de réalisation, non représenté, le dispositif d'éclairage 7 comprend trois modules lumineux parmi lesquels un premier module lumineux et un deuxième module lumineux sont compris dans un sous-ensemble pouvant être configuré selon le deuxième mode de réalisation tel qu'exposé précédemment. Un troisième module lumineux est monté mobile sur la platine principale 9 par l'intermédiaire d'un support intermédiaire au niveau de deux points de pivotement définissant un axe de pivotement propre au troisième module lumineux et parallèle aux axes de pivotement du premier module et du deuxième module. La description précédente, faite en référence au troisième mode de réalisation notamment, s'applique *mutatis mutandis* à la présente alternative. Particulièrement, similairement à ce qui a été précédemment exposé, le dispositif d'éclairage 7 est avantageusement configuré de sorte que le premier moyen de réglage 13 permet le déplacement simultané des trois modules autour du premier axe de réglage 1000 par l'intermédiaire de la platine principale 9 et le deuxième moyen de réglage 23 permet le déplacement simultané d'au moins deux des trois modules autour de l'axe de pivotement qui leur est propre.

Ainsi, le dispositif d'éclairage 7 selon l'invention permet le réglage simultané, horizontal et vertical, d'une pluralité de modules 211 lumineux par l'intermédiaire d'au moins un organe de couplage 25. Le dispositif d'éclairage 7 selon l'invention est avantageusement adapté à un espace limité, notamment en face avant de véhicule 1, la solution proposée présentant un encombrement limité.

En outre, indépendamment du mode de réalisation mis en œuvre, au moins un module de la pluralité de modules peut être équipé d'un moyen de microajustement 91, propre audit module, permettant son réglage vertical et/ou horizontal, autrement dit son réglage autour de l'axe de pivotement qui lui est propre ou autour d'un axe parallèle au premier axe de réglage 1000 respectivement. On entend par « microajustement » un réglage de faible amplitude, qui ne sera notamment pas transmis à tout autre module de la pluralité de module relié au module considéré. A titre d'exemple non limitatif, un tel réglage peut être de l'ordre de ±1°. En l'espèce, dans le troisième mode de réalisation, le troisième module 211c est équipé d'un tel moyen de microajustement 211c indépendamment des deux autres. En particulier, le moyen de microajustement 91 est équipé au niveau des points de pivotement 19 du module considéré. L'activation du moyen de microajustement 91 permet ainsi l'ajustement seul de la position du module, et par extension le réglage de l'alignement des faisceaux lumineux émis, auquel est relié indépendamment des autres modules de la pluralité de modules. A noter qu'un ou plusieurs moyen(s) de microajustement 91 peu(ven)t également être intégré(s) à au moins l'un des modules de la pluralité de modules tels qu'exposés en référence au premier mode de réalisation ou au deuxième mode de réalisation.

La présente invention ne saurait toutefois se limiter aux moyens et configurations décrits et illustrés ici et elle s'étend également à tout moyen ou configuration équivalents et à toute combinaison techniquement opérante tels que définis par les présentes revendications.

## Revendications

1. Dispositif d'éclairage (7) pour un projecteur, notamment un projecteur avant, d'un véhicule (1), le dispositif d'éclairage (7) étant **caractérisé en ce qu'**il comprend :
- une platine principale (9),
- au moins trois modules (2111a, 211b, 211c) lumineux distincts, un premier module (211a) lumineux et un deuxième module (211b) lumineux étant montés chacun sur un support intermédiaire (217a, 217b), chaque support intermédiaire étant monté, relativement à la platine principale (9), de manière mobile autour d'un axe de pivotement (2200a, 2200b) propre au module (11, 111, 211) lumineux considéré, notamment un axe horizontal, un troisième module (211c) lumineux étant monté mobile sur la platine principale (9) par l'intermédiaire d'un support intermédiaire (217c) au niveau de deux points de pivotement (19) définissant un axe de pivotement (2200c) propre au troisième module lumineux,
les axes de pivotement des différents modules (211 a, 211b, 211c) lumineux étant parallèles et distincts,
le dispositif d'éclairage (7) comprenant en outre :
- un premier moyen de réglage (13) configuré pour déplacer la platine principale (9) autour d'un premier axe de réglage (1000), notamment un axe vertical, orthogonal aux axes de pivotement (2200a, 2200b, 2200c) des modules (211a, 211b, 211c), et permettant le déplacement simultané des au moins trois modules (211a, 211b, 211c) autour du premier axe de réglage (1000) par l'intermédiaire de la platine principale (9) ;
- un deuxième moyen de réglage (23) configuré pour déplacer simultanément les au moins trois modules (211 a, 211b, 211 c) relativement à la platine principale (9), chacun par basculement autour de l'axe de pivotement (2200a, 2200b, 2200c) qui lui est propre ; **caractérisé en ce que** le premier module (211a) lumineux et le deuxième module (211b) lumineux sont au moins en partie superposés le long d'une direction orthogonale aux axes de pivotement (2200a, 2200b, 2200c) notamment le long d'une direction verticale (Z), et le deuxième module (211b) lumineux et le troisième module (211c) lumineux sont juxtaposés le long d'une direction parallèle aux axes de pivotement (2200b, 2200c), notamment le long d'une direction horizontale le dispositif d'éclairage (7) comprenant en outre :
- un premier organe de couplage (25a) du premier module (211a) et du deuxième module (211b) reliant les supports intermédiaires (217a, 217b) portant les premier et deuxième modules de sorte à permettre un déplacement simultané des premier et deuxième modules par transmission d'un déplacement de l'un des premier et deuxième modules à l'autre des premier et deuxième modules et réciproquement, et
- un deuxième organe de couplage (25b) du deuxième module (21bb) au troisième module (211c) reliant les supports intermédiaires (217b, 217c) portant les deuxième et troisième modules de sorte à permettre un déplacement simultané des deuxième et troisième modules par transmission d'un déplacement de l'un des deuxième et troisième modules à l'autre des deuxième et troisième modules et réciproquement, de sorte que le deuxième moyen de réglage (23) permet le déplacement simultanément des trois modules (211a, 211b, 211c) autour de leur axe de pivotement (2200a, 2200b, 2200c) respectif.

2. Dispositif d'éclairage (7) selon l'une des revendications précédentes, dans lequel le premier et le deuxième modules (211a, 211b) lumineux présentent un décalage, relativement l'un à l'autre, le long d'une direction orthogonale au premier axe de réglage (1000) et aux axes de pivotement (2200b, 2200c), notamment une direction longitudinale (X).

3. Dispositif d'éclairage (7) selon l'une des revendications précédentes, dans lequel le premier organe de couplage (25a) comprend une biellette (45) reliée à l'un des premier et deuxième modules (211a, 211b) en une première zone de couplage (41, 41') et à l'autre des premier et deuxième modules (211a, 211b) en une deuxième zone de couplage (43, 43'), la biellette (45) étant coudée de sorte qu'elle présente au moins un premier coude (51a), s'étendant aux abords de la première zone de couplage (41, 41'), et un deuxième coude (51b), s'étendant aux abords de la deuxième zone de couplage (43, 43').

4. Dispositif d'éclairage (7) selon l'une des revendications précédentes, comprenant, en outre, au moins un moyen de guidage (59) du premier organe de couplage (25a) au moins en partie relié au support intermédiaire (217a) propre au premier module ( 211a) et/ou au moins en partie relié au support intermédiaire (217b) propre au deuxième module (211b).

5. Dispositif d'éclairage (7) selon l'une des revendications précédentes, dans lequel les deuxième et troisième modules (211b, 211c) lumineux présentent un décalage, relativement l'un à l'autre, le long d'une direction orthogonale au premier axe de réglage (1000) et aux axes de pivotement (2200b, 2200c), notamment une direction longitudinale (X).

6. Dispositif d'éclairage (7) selon l'une des revendications précédentes, dans lequel le deuxième organe de couplage (25b) comprend une glissière (71) reliée à l'un des deuxième et troisième modules (211b, 211c) en une première zone de couplage (41") et à l'autre des deuxième et troisième modules (211b, 211c) en une deuxième zone de couplage (43"), la glissière (71) étant configurée pour coopérer avec la platine principale (9) afin d'être déplacée le long d'une direction perpendiculaire au premier axe de réglage (1000) et aux axes de pivotement, notamment une direction longitudinale.

7. Dispositif d'éclairage (7) selon l'une des revendications précédentes, dans lequel le premier axe de réglage (1000) est centré au sein de la platine principale (9) le long d'une direction parallèle aux axes de pivotement.

## Patentansprüche

1. Beleuchtungseinrichtung (7) für einen Scheinwerfer, insbesondere einen Vorderscheinwerfer, eines Fahrzeugs (1), wobei die Beleuchtungseinrichtung (7) **dadurch gekennzeichnet ist, dass** sie Folgendes beinhaltet:
- einen Hauptrahmen (9),
- mindestens drei separate Lichtmodule (2111a, 211b, 211c), wobei ein erstes Lichtmodul (211a) und ein zweites Lichtmodul (211b) jeweils an einem Zwischenträger (217a, 217b) montiert sind, wobei jeder Zwischenträger relativ zu dem Hauptrahmen (9) um eine dem betrachteten Lichtmodul (11, 111, 211) eigene Schwenkachse (2200a, 2200b), insbesondere eine horizontale Achse, beweglich montiert ist, wobei ein drittes Lichtmodul (211c) an zwei Schwenkpunkten (19), die eine dem dritten Lichtmodul eigene Schwenkachse (2200c) definieren, mittels eines Zwischenträgers (217c) beweglich an dem Hauptrahmen (9) montiert ist, wobei die Schwenkachsen der unterschiedlichen Lichtmodule (211a, 211b, 211c) parallel und separat sind, wobei die Beleuchtungseinrichtung (7) ferner Folgendes beinhaltet:
- ein erstes Einstellmittel (13), das dazu konfiguriert ist, den Hauptrahmen (9) um eine erste Einstellachse (1000), insbesondere eine vertikale Achse, die zu den Schwenkachsen (2200a, 2200b, 2200c) der Module (211a, 211b, 211c) orthogonal ist, zu bewegen, und das die simultane Bewegung der mindestens drei Module (211a, 211b, 211c) um die erste Einstellachse (1000) mittels des Hauptrahmens (9) ermöglicht;
- ein zweites Einstellmittel (23), das dazu konfiguriert ist, die mindestens drei Module (211a, 211b, 211c) relativ zu dem Hauptrahmen (9) jeweils durch Kippen um die ihm eigene Schwenkachse (2200a, 2200b, 2200c) simultan zu bewegen; **dadurch gekennzeichnet, dass** sich das erste Lichtmodul (211a) und das zweite Lichtmodul (211b) entlang einer zu den Schwenkachsen (2200a, 2200b, 2200c) orthogonalen Richtung, insbesondere entlang einer vertikalen Richtung (Z), mindestens teilweise überlagern und das zweite Lichtmodul (211b) und das dritte Lichtmodul (211c) entlang einer zu den Schwenkachsen (2200b, 2200c) parallelen Richtung, insbesondere entlang einer horizontalen Richtung, nebeneinanderliegen,
wobei die Beleuchtungseinrichtung (7) ferner Folgendes beinhaltet:
- ein erstes Organ zum Koppeln (25a) des ersten Moduls (211a) und des zweiten Moduls (211b), das die Zwischenträger (217a, 217b), die das erste und das zweite Modul tragen, verbindet, um so eine simultane Bewegung des ersten und des zweiten Moduls durch Übertragung einer Bewegung von einem von dem ersten und dem zweiten Modul auf das andere von dem ersten und dem zweiten Modul und umgekehrt zu ermöglichen, und
- ein zweites Organ zum Koppeln (25b) des zweiten Moduls (21bb) mit dem dritten Modul (211c), das die Zwischenträger (217b, 217c), die das zweite und das dritte Modul tragen, verbindet, um so eine simultane Bewegung des zweiten und des dritten Moduls durch Übertragung einer Bewegung von einem von dem zweiten und dem dritten Modul auf das andere von dem zweiten und dem dritten Modul und umgekehrt zu ermöglichen, sodass das zweite Einstellmittel (23) die simultane Bewegung der drei Module (211a, 211b, 211c) um ihre jeweilige Schwenkachse (2200a, 2200b, 2200c) ermöglicht.

2. Beleuchtungseinrichtung (7) nach einem der vorhergehenden Ansprüche, wobei das erste und das zweite Lichtmodul (211a, 211b) entlang einer zu der ersten Einstellachse (1000) und zu den Schwenkachsen (2200b, 2200c) orthogonalen Richtung, insbesondere einer Längsrichtung (X), einen Versatz relativ zueinander aufweisen.

3. Beleuchtungseinrichtung (7) nach einem der vorhergehenden Ansprüche, wobei das erste Koppelorgan (25a) eine Stange (45) beinhaltet, die mit einem von dem ersten und dem zweiten Modul (211a, 211b) in einem ersten Koppelbereich (41, 41') und mit dem anderen von dem ersten und dem zweiten Modul (211a, 211b) in einem zweiten Koppelbereich (43, 43') verbunden ist, wobei die Stange (45) abgewinkelt ist, sodass sie mindestens ein erstes Winkelstück (51a), das sich in der Nähe des ersten Koppelbereichs (41, 41') erstreckt, und ein zweites Winkelstück (51b), das sich in der Nähe des zweiten Koppelbereichs (43, 43') erstreckt, aufweist.

4. Beleuchtungseinrichtung (7) nach einem der vorhergehenden Ansprüche, die ferner mindestens ein Führungsmittel (59) für das erste Koppelorgan (25a) beinhaltet, das mindestens teilweise mit dem dem ersten Modul (211a) eigenen Zwischenträger (217a) verbunden ist und/oder mindestens teilweise mit dem dem zweiten Modul (211b) eigenen Zwischenträger (217b) verbunden ist.

5. Beleuchtungseinrichtung (7) nach einem der vorhergehenden Ansprüche, wobei das zweite und das dritte Lichtmodul (211b, 211c) entlang einer zu der ersten Einstellachse (1000) und zu den Schwenkachsen (2200b, 2200c) orthogonalen Richtung, insbesondere einer Längsrichtung (X), einen Versatz relativ zueinander aufweisen.

6. Beleuchtungseinrichtung (7) nach einem der vorhergehenden Ansprüche, wobei das zweite Koppelorgan (25b) eine Gleitführung (71) beinhaltet, die mit einem von dem zweiten und dem dritten Modul (211b, 211c) in einem ersten Koppelbereich (41") und mit dem anderen von dem zweiten und dem dritten Modul (211b, 211c) in einem zweiten Koppelbereich (43") verbunden ist, wobei die Gleitführung (71) dazu konfiguriert ist, mit dem Hauptrahmen (9) zusammenzuwirken, um entlang einer zu der ersten Einstellachse (1000) und zu den Schwenkachsen senkrechten Richtung, insbesondere einer Längsrichtung, bewegt zu werden.

7. Beleuchtungseinrichtung (7) nach einem der vorhergehenden Ansprüche, wobei die erste Einstellachse (1000) entlang einer zu den Schwenkachsen parallelen Richtung innerhalb des Hauptrahmens (9) zentriert ist.

## Claims

1. A lighting device (7) for a headlamp, in particular a front headlamp, of a vehicle (1), the lighting device (7) being **characterized in that** it comprises:
- a main mounting plate (9),
- at least three separate luminous modules (211a, 211b, 211c), a first luminous module (211a) and a second luminous module (211b) being each mounted on an intermediate support (217a, 217b), each intermediate support being movably mounted, relative to the main mounting plate (9), about a pivot axis (2200a, 2200b) specific to the luminous module (11, 111, 211) in question, in particular a horizontal axis, a third luminous module (211c) being movably mounted on the main mounting plate (9) via an intermediate support (217c) at two pivot points (19) defining a pivot axis (2200c) specific to the third luminous module, the pivot axes of the different luminous modules (211a, 211b, 211c) being parallel and separate,
the lighting device (7) further comprising:
- first adjustment means (13) configured to move the main mounting plate (9) about a first adjustment axis (1000), in particular a vertical axis, orthogonal to the pivot axes (2200a, 2200b, 2200c) of the modules (211a, 211b, 211c), and allowing the simultaneous movement of the at least three modules (211a, 211b, 211c) about the first adjustment axis (1000) via the main mounting plate (9);
- second adjustment means (23) configured to move the least three modules (211a, 211b, 211c) simultaneously relative to the main mounting plate (9), each by tilting about the pivot axis (2200a, 2200b, 2200c) specific thereto;
**characterized in that**
the first luminous module (211a) and the second luminous module (211b) are at least partially superposed along a direction orthogonal to the pivot axes (2200a, 2200b, 2200c), in particular along a vertical direction (Z), and
the second luminous module (211b) and the third luminous module (211c) are juxtaposed along a direction parallel to the pivot axes (2200b, 2200c), in particular along a horizontal direction
the lighting device (7) further comprising:
- a first coupling member (25a) for coupling the first module (211a) and the second module (211b) connecting the intermediate supports (217a, 217b) bearing the first and second modules so as to allow the simultaneous movement of the first and second modules by transfer of the movement of one of the first and second modules to the other of the first and second modules and vice versa, and
- a second coupling member (25b) for coupling the second module (211b) to the third module (211c) connecting the intermediate supports (217b, 217c) bearing the second and third modules so as to allow the simultaneous movement of the second and third modules by transfer of the movement of one of the second and third modules to the other of the second and third modules and vice versa, so that the second adjustment means (23) allow the simultaneous movement of the three modules (211a, 211b, 211c) about their respective pivot axes (2200a, 2200b, 2200c).

2. The lighting device (7) as claimed in one of the preceding claims, wherein the first and second luminous modules (211a, 211b) are offset relative to each other along a direction orthogonal to the first adjustment axis (1000) and to the pivot axes (2200b, 2200c), in particular a longitudinal direction (X).

3. The lighting device (7) as claimed in one of the preceding claims, wherein the first coupling member (25a) comprises a rod (45) connected to one of the first and second modules (211a, 211b) in a first coupling zone (41, 41') and to the other of the first and second modules (211a, 211b) in a second coupling zone (43, 43'), the rod (45) being bent so that it has at least a first elbow (51a), extending in the vicinity of the first coupling zone (41, 41'), and a second elbow (51b), extending in the vicinity of the second coupling zone (43, 43').

4. The lighting device (7) as claimed in one of the preceding claims, further comprising at least one guide means (59) for guiding the first coupling member (25a) at least partially connected to the intermediate support (217a) specific to the first module (211a) and/or at least partially connected to the intermediate support (217b) specific to the second module (211b).

5. The lighting device (7) as claimed in one of the preceding claims, wherein the second and third luminous modules (211b, 211c) are offset relative to each other along a direction orthogonal to the first adjustment axis (1000) and to the pivot axes (2200b, 2200c), in particular a longitudinal direction (X).

6. The lighting device (7) as claimed in one of the preceding claims, wherein the second coupling member (25b) comprises a slider (71) connected to one of the second and third modules (211b, 211c) in a first coupling zone (41") and to the other of the second and third modules (211b, 211c) in a second coupling zone (43"), the slider (71) being configured to interact with the main mounting plate (9) in order to be moved along a direction perpendicular to the first adjustment axis (1000) and to the pivot axes, in particular a longitudinal direction.

7. The lighting device (7) as claimed in one of the preceding claims, wherein the first adjustment axis (1000) is centered within the main mounting plate (9) along a direction parallel to the pivot axes.
